# EUROPEAN PATENT SPECIFICATION

(11) **EP 1 661 796 B1**
(45) Date of publication and mention of the grant of the patent: **27.02.2013**
(21) Application number: 05019739.1
(22) Date of filing: 10.09.2005
(51) Int. Cl.: B62D 33/06

(54) **Cabin suspension system**
Fahrerhausaufhängung
Système de suspension d'une cabine

(30) Priority: 29.11.2004 DE 102004057679
(43) Date of publication of application: 31.05.2006
(73) Proprietor: CLAAS Tractor SAS, 78141 Velizy-Villacoublay (FR)
(72) Inventor: Tollemer, Samuel, 50360 Picauville (FR)
(74) Representative: Ellerbrächter, Dirk

(56) References cited:
- EP-A1- 0 884 595
- EP-A1- 0 994 009
- EP-A1- 1 468 870
- EP-A2- 0 908 376
- EP-A2- 1 413 462
- WO-A1-99/24309
- DE-A1- 4 313 973
- GB-A- 2 079 701
- US-A- 5 299 651
- US-A- 5 725 066

## Description

The invention relates to a flexible cabin suspension system for vibration-damped support of a vehicle cabin in accordance with the preamble of claim 1.

Vibration-damped support of vehicle cabins is a method that has long been used to improve the travel comfort of the operator of the respective vehicle. An example of such may be found for instance in European Patent EP 0 426 510 B1, in which a flexible cabin suspension system is disclosed that supports the front and rear areas of the vehicle cabin via spring suspension systems on the frame. In this situation, the spring suspension systems are made with identical elastic compression struts, which provide spring suspension for the vehicle cabin in approximately equal measure at each of the support points. Because the spring suspension systems are similar, reliable vibration reduction may be achieved very inexpensively. However, the disadvantage of such systems is that the damping characteristics of the individual spring suspension systems are practically identical, which means that it is impossible to adjust the achievable damping characteristics to any great degree.

In this context, it is also known to brace the vehicle cabin against the vehicle chassis via a system of suspension elements, the individual suspension elements being coupled together via an electronic control and regulating system, which enables them to respond to the smallest vibration states and position changes of the vehicle cabin. Because the individual suspension elements are constructed identically, the algorithms stored in the control and regulating system for all the suspension elements are based on approximately the same mathematical relationships, so that the complex control and regulating process is underpinned by well-defined regulating structures. Because the vibration conditions at each support point sometimes vary considerably but to external influences, designs of this nature often entail much regulating effort in order to achieve vehicle suspension conditions that are acceptable to the operator.

From EP 0 994 009 A1 a cabin suspension is known, wherein a cabin is supported movably against the chassis of a tractor by help of a plurality of actors. The actors serve to compensate slope. Elastic elements between actors and cabin damp vibrations and serve to compensate changes in the angle between cabin and chassis. There is no possibility to influence the damping effect of the elastic elements.

A cabin suspension system known from WO 99/24309 A1 comprises several active vibration dampers between cabin and chassis, the vibration dampers being controlled depending on parameters of a vehicle system. For a driver of the vehicle, there is no possibility to take influence on the damping effect.

Further, EP 0 908 376 A2 discloses a suspension system according to the preamble of claim 1 for the cabin of a tractor including a front and a rear suspension unit, wherein the front and rear suspension units may have a different basic characteristic, for example due to differently rated springs on the front and rear suspension unit. It is not possible to influence the characteristic of the suspension system during travelling.

The object of this invention is to suggest a flexible cabin suspension system for vibration-damped support of a vehicle cabin that avoids the disadvantages of the related art and particularly allows regulation to be carried out with minimal effort.

This object is solved according to the invention by the characterizing features of claim 1. Further advantageous designs and refinements of the invention are described in the subordinate claims.

By assigning the suspension elements at least to first and second suspension systems and providing the suspension elements belonging to the same suspension system with identical damping characteristics and suspension elements belonging to different suspension systems with different damping characteristics ensures that the damping systems are better adapted to the external conditions in their respective area of use. This has the particular advantage that the control and regulating effort necessary to achieve satisfactory suspension of the vehicle cabin may be reduced significantly, since now the basic vibration behaviour of each damping system is already adapted to the external conditions that affect it individually. It also enables more comfortable spring suspension systems to be used in the area in the cabin where the vehicle operator sits.

In the simplest case, the damping characteristics may be determined by the technological design of the respective damping system. The main advantage of this is that the algorithms for calculating the respective damping characteristics may be simplified.

The damping characteristic regulation is then further simplified if the damping characteristics of the respective damping systems are defined by damping characteristic curves, in which case in an advantageous refinement of the invention the characteristic curves are stored in modifiable form in a control and evaluation unit.

A very effective means of regulating the damping characteristics of the second damping system and of the suspension elements is achieved when the damping characteristics thereof are changeable depending on the operating state of the vehicle and/or on the motion of the vehicle cabin.

Since both the pitch and roll motions of a vehicle cabin significantly impair the travel comfort of a vehicle, in an advantageous refinement of the invention it is suggested that the motion of the cabin to be considered when modifying the respective damping characteristics should include pitch and roll and the vertical motion of the cabin.

The damping characteristics of the second suspension system may be regulated very simply with a design feature according to which sensors for capturing the operating state of the vehicle are assigned to the vehicle and/or the vehicle cabin and the operating state signals from the sensors are transmitted to the control and evaluation unit, where they, change the damping characteristics of the suspension elements of the second suspension system by means of the stored damping characteristic curve.

In an advantageous refinement of the invention, the damping characteristic curves define the intensity of the damping depending on the kinematic parameters of the vehicle and/or the vehicle cabin, in which case the kinematic parameters in the simplest case include the travel speed of the vehicle, accelerations of the vehicle and/or the cabin, the steering angle of the vehicle axles and/or the cabin mass and its position. If the cabin mass parameter is calculated, particularly the inclination of the vehicle cabin due to unequal weight distribution in the cabin when several passengers are sitting in or climbing into or out of the vehicle may be avoided.

A particularly advantageous design feature is obtained if the sensors have the form of acceleration sensors and/or speed sensors and/or steering angle sensors, which are known *per se* and whose effectiveness is well established.

In order to adapt the basic damping characteristic largely to the respective prevailing external conditions to begin with, it is advantageous if the individual vibration damping element is constructed as a combination of several different damping elements. In a very simple case the various damping elements are constructed as a combination of a spring and a damper and whereas the damper can be separated from or integrated with the spring. This particularly enables relatively sensitive harmonization between the resilient and the damping properties.

Relatively sensitive harmonization between the resilient and the damping properties is obtained for example if the combination of damping elements in a vibration damping element includes a standard spring shock absorber mechanism and/or a spring shock absorber combination with pneumatic damping element and/or a spring shock absorber combination with hydropneumatic reservoir. It lies in the scop of the invention that the combination of spring and damper in a suspension element can include a standard mechanism with a coil spring and a damper, or a spring damper combination of a pneumatic spring and a damper, or a spring damper combination of a hydropneumatic accumulator and a damper. The dampers can include standard dampers for the first suspension system and electronically controlled dampers for the second suspension system.

Depending on the desired speed of adaptation of the damping characteristics to changes in the external conditions, provision is made according to the invention such that the respective damping characteristic curve may be selected by the operator of the vehicle.

To ensure that inclinations of the vehicle have insignificant or no effect on the sitting position of the vehicle operator and at the same time to ensure optimal suspension of the vehicle cabin, in an advantageous embodiment of the invention means may be provided to enable the suspension elements to shift the vehicle cabin vertically relative to the chassis when several passengers are sitting in or climbing into or out of the vehicle, and so that the height characteristics of these suspension elements (5, 6) may be effected depending on the mass changes of the vehicle cabin (4) by controlling the pneumatic springs or the hydropneumatic accumulators.

Because of the sometimes considerable changes in the suspension and damping properties of the suspension elements if they are operated at the extremes of their ranges, in an advantageous refinement of the invention the damping characteristic may also be regulated on the basis of the deviation of the suspension elements. In the simplest case, this may be assured by providing means to raise the damping intensity as the deviation of the suspension elements increases.

Further advantageous embodiments are described in additional dependent claims and will be explained in the following with reference to an exemplary embodiment shown in several figures. In the drawing:
- Figure 1: is a side view of a vehicle configured as a tractor with the flexible cabin suspension system according to the invention
- Figure 2: is a side view of a vehicle in a second tractor configuration with the flexible cabin suspension system according to the invention

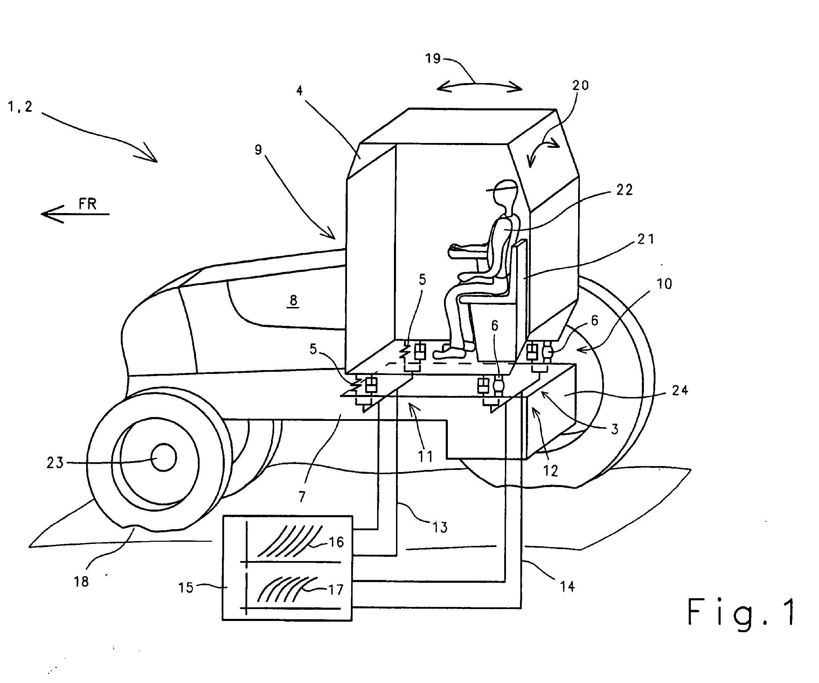

Figure 1 shows schematically the flexible cabin suspension system 3 according to the invention using the example of a vehicle 1 configured as a tractor 2, in which vehicle cabin 4 is coupled to supporting frame construction 7 of the chassis 8 of the tractor 2 via suspension elements 5,6, that will be described in detail in the following. Suspension elements 5,6 are arranged on both the front area 9 and the following rear area 10 of the vehicle cabin, only two of each suspension element 5, 6 being shown positioned in each area, 9, 10 in the embodiment represented. The scope of the invention also covers the possibilities that only one vibration damping element 5,6, or multiple suspension elements 5,6, may be arranged in each area 9,10.

According to the invention, suspension elements 5 assigned to the front area 9 of vehicle cabin 4 form a first suspension system 11 and the suspension elements 6 assigned to the rear area 10 of vehicle cabin 4 form a second suspension system 12. The fact that suspension elements 5, 6 in the respective suspension systems 11, 12 have the same design assures that all suspension elements 5, 6 in one suspension system 11, 12 will have approximately the same basic damping characteristic. Each suspension system 11, 12 is connected via a wiring system 13, 14 to a control and evaluation unit 15, in which damping characteristic curves 16, 17 are stored in a manner that will be described in detail, and which define the damping characteristics of suspension systems 11, 12. The identical design of all the suspension elements 5, 6 in a suspension system 11, 12 means that, like the desired basic damping' characteristics the plots of the characteristic curves 16, 17 associated with each suspension system 11, 12 also match each other. In order to achieve a high degree of suspension comfort for the vehicle operator, which may also be adapted readily to changing external conditions such as very uneven terrain or prolonged high traveling speeds, damping characteristic curves 16, 17 are stored in modifiable form in the control and evaluation unit, so that they may be changed, stored elsewhere or deleted at any time.

Accelerating operations in and counter to the direction of travel FR of the tractor are a significant factor in the motion of vehicle cabin 4 which is supported by spring means on chassis 8 of tractor 2. These essentially include accelerating and braking operations during forward and reverse travel. Ground unevenness 18 in and across the direction of the travel FR and cornering of the tractor 2 also cause significant motion of the vehicle cabin 4. Depending on the intensity of these external conditions, vehicle cabin 4 describes heaving motions, pitching motions 19 either in or counter to the direction of travel FR, and rolling motions 20 transversely to the direction of travel. The effect of these systems on the degree of suspension comfort driver 22 experiences varies considerably depending on the position of driver's seat 21 relative to suspension systems 11, 12. With regard to ground unevenness, the way in which suspension elements 5, 6 are attached to the respective vehicle axles 23, 24 of tractor 2 also has a significant influence. Because vehicles 1 are generally constructed symmetrically, suspension elements 5, 6 of the respective suspension systems 11, 12 are subjected to approximately the same conditions, with the result that the regulation, which is described in the following, may be made considerably simpler by the choice of a' suitable basic damping characteristic for the second suspension system 12.

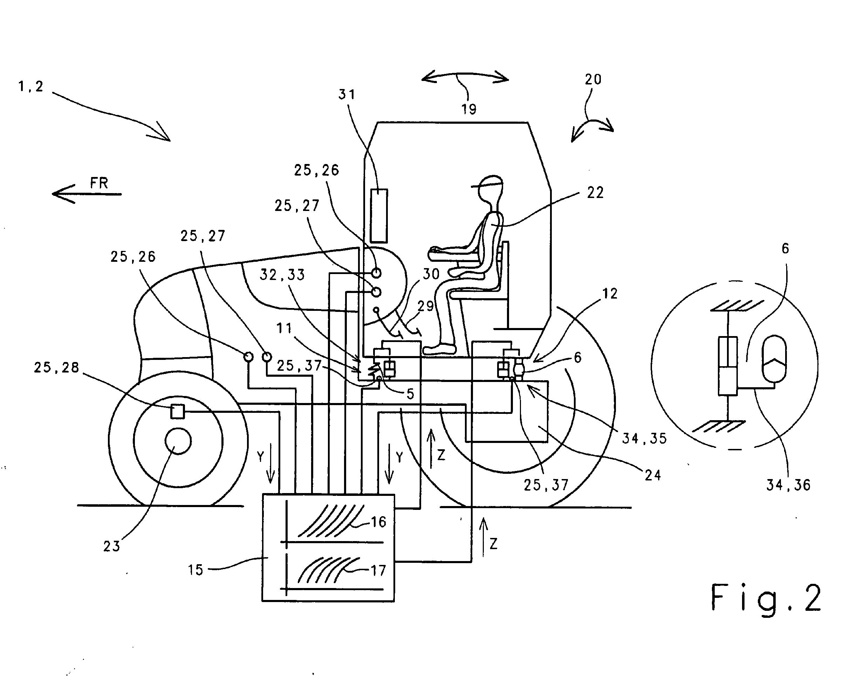

Depending on the intensity of the external conditions, vehicle cabin 4 attempts to carry out heaving, pitching and rolling motions 19, 20, whereas suspension elements 5, 6 assigned to vehicle cabin 4 are intended to counteract these heaving, pitching and rolling motions 19, 20, to provide the driver 22 a high degree of driving comfort. In order for the second suspension system 12 to be able to respond quickly and precisely to these external conditions and the changes associated therewith in order to guarantee driving comfort based on the suspension system, the operating state of the tractor is monitored by sensors 25 as shown in Figure 2. These sensors 25 may have the form of speed sensors 26, acceleration sensors 27, and steering angle sensors 28 and position or mass sensors 37 for example, and the speed and acceleration sensors 26, 27 may be disposed on chassis 8 or also on vehicle cabin 4. The scope of the invention also covers the possibility that accelerating and braking operations are also only sensed by the assignment of sensors to the accelerator pedal 29 and the brake pedal 30 in vehicle cabin 4, which sensors deduce the acceleration or slowing of the vehicle 1 on the basis of the deviation of the respective pedal 29, 30. The scope of the invention further covers the possibility that sensors 25, 37 for determining mass and/or vertical position are assigned to the vehicle cabin 4, and that these sense the weight of vehicle cabin, which mass is ultimately also a measurement of the deflection of vehicle cabin 4. This is particularly important when one or more passengers 22 climb into or out of vehicle cabin 4 or if several people are sitting therein. To enable the various suspension systems 11, 12 to respond' sensitively to the different weight distributions, in an advantageous refinement of the invention independent mass or position sensors 37 are assigned to suspension systems 11, 12.

The signals generated by the respective sensors 25 are transferred as operating state signals Y to control and evaluation unit 15 which is for example installed in vehicle cabin 4. Because damping characteristic curves 16, 17 stored in control and evaluation unit 15 define the behaviour with regard to absorbing kinetic energy of the various suspension systems 11, 12 as a function of the external conditions influencing the various operating states of vehicle 1 and/or vehicle cabin 4, operating state signals Y may be used directly in the selection of a suitable characteristic curve 17. The appropriate characteristic curve 17 may advantageously be selected automatically by the control and evaluation unit 15 itself, thereby relieving the driver 22 of the need to make a deliberate selection. On the other hand, it would also be conceivable that operating state signals Y might be displayed for the driver 22 via a display 31 arranged in vehicle cabin 4, so that the driver could himself choose a suitable damping characteristic curve 17 for the suspension system 12.

When a suitable damping characteristic curve 17 has been chosen, control and evaluation unit 15 generates adjustment signals Z, which cause the damping characteristics at the suspension elements 6 of the second suspension system 12 to be changed. Depending on the construction of the suspension element 6, adjustment signals Z cause the resilience of the suspension and/or the damping effect of the respective suspension element 6 to be increased or decreased. As a result, this causes' suspension element 6 work against heaving, pitching and rolling motions 19, 20 of vehicle cabin 4, which in turn perceptibly improves traveling comfort due to improved suspension properties.

Since particularly tractors 2 are designed specifically so that the driver's seat 21 is arranged in the rear area 10 of vehicle cabin 4 and also in the area of rear axle 24 of the tractor 2, comfort is being improved improved less expense in that only suspension elements 6 in damping system 12 that is assigned to rear area 10 of vehicle cabin 4 are highly sensitive and may be finely adjusted. In the invention, this is assured for example if suspension elements 5 assigned to the front area of vehicle cabin 4 have the form of standard spring suspension mechanisms known per se including in the simplest case elastic spring-loaded struts 33 or coil springs 33 and well known standard dampers. By contrast, suspension elements 6 as shown in the embodiment of Figure 2 may be configured as a highly sensitive spring-damper combination with fine tuning capability and a pneumatic damping element 35. As shown in the detail in Figure 2, vibration damping element 6 belonging to damping system 12 which is arranged in the rear area 10 of vehicle cabin 4 may also be constructed as a spring-damping combination 34 with hydropneumatic accumulator 36.

The scope of the invention includes the possibility that suspension elements 6 of the second suspension systems 12 may be moved by adjustment signals Z to such a point that vehicle cabin 4 is situated vertically with respect to chassis 8, so that driver 22 always has a horizontal sitting position regardless of the slope of the terrain. In this case, in order to assure optimum suspension comfort even when the sitting position is compensated, the damping characteristic according to the invention may also be capable of being changed as a function of the change in vertical position of vehicle cabin 4. In this context, damping characteristic curves 16, 17 stored in control and evaluation unit 15 may also take into account the degree of inclination of suspension elements 5, 6. This is particularly important in view of the fact that the suspension and damping properties of spring shock absorber mechanisms 32, 34 vary considerably in response to the deflection of the respective suspension elements 5, 6. In response to the known behaviour in which rigidity increases with deflection, a further advantageous embodiment of the invention may provide that the intensity of the damping increases as the deflection of the suspension elements 5, 6 increases. These relationships are also mapped in the damping characteristic curves 16, 17 that define the damping characteristic.

Legend:
- 1: Vehicle
- 2: Tractor
- 3: Flexible cabin suspension system
- 4: Vehicle cabin
- 5: Suspension element
- 6: Suspension element
- 7: Supporting frame construction
- 8: Chassis
- 9: Front area
- 10: Rear area
- 11: First Suspension system
- 12: Second Suspension system
- 13: Wiring system
- 14: Wiring system
- 15: Control and evaluation unit
- 16: Damping characteristic curve of the first suspension system
- 17: Damping characteristic curve of the second suspension system
- 18: Ground unevenness
- 19: Pitching motion
- 20: Rolling motion
- 21: Driver's seat
- 22: Driver
- 23: Front axle
- 24: Rear axle
- 25: Sensor
- 26: Speed sensor
- 27: Acceleration sensor
- 28: Wheel angle sensor
- 29: Accelerator pedal
- 30: Brake pedal
- 31: Display
- 32: Standard spring damper arrangement
- 33: coil spring
- 34: Spring damper combination
- 35: Pneumatic Damping element
- 36: Hydropneumatic accumulator
- 37: Mass/position sensor
- FR: Direction of travel
- Y: Operating state signal
- Z: Adjusting signal

## Claims

1. A flexible cabin suspension system (3) for vibration-damped support of a vehicle cabin (4) on the chassis (8) of a tractor (2), wherein a plurality of suspension elements (5, 6) are interposed between the vehicle cabin (4) and the chassis (8) to absorb vibrations,
wherein suspension elements (5) assigned to the front area (9) of the vehicle cabin (4) form a first suspension system (11) and suspension elements (6) assigned to the rear area (10) of the vehicle cabin (4) form a second suspension system (12), in which rear area (10) a driver's seat (21) and the rear axle (24) of the tractor (2) are arranged, and wherein suspension elements (5, 6) belonging to the same suspension system (11, 12) have the same basic damping characteristics and the suspension elements (5, 6) belonging to different suspension systems (11, 12) have different basic damping characteristics in that suspension elements (5) of the first suspension system (11) include a standard spring-damper combination (32, 33)
**characterized in that** suspension elements (6) of the second suspension system (12) include a spring damper combination (34) with electronically controlled dampers such that its damping characteristics curve (17) is selectable by the operator of the tractor (2).

2. The flexible cabin suspension system for vibration-damped support of a vehicle cabin according to claim 1,
**characterized in that**
the damping characteristic curves (16, 17) are stored in modifiable form in a control and evaluation unit (15).

3. The flexible cabin suspension system for vibration-damped support of a vehicle cabin according to any of the previous claims,
**characterized in that**
the damping characteristic of the second suspension system (12) is changeable depending on the operating state of the vehicle (1, 2) and/or depending on the motion of the vehicle cabin (4).

4. The flexible cabin suspension system for vibration-damped support of a vehicle cabin according to any of the previous claims,
**characterized in that**
the damping characteristic of the suspension elements (6) is changeable depending on the operating state of the vehicle (1, 2) and/or depending on the motion of the vehicle cabin (4).

5. The flexible cabin suspension system for vibration-damped support of a vehicle cabin according to claim 3 or 4,
**characterized in that**
the motion of the vehicle cabin (4) includes the heaving motions, the rolling motions (20) and the pitching motions (19) of the vehicle cabin (4).

6. The flexible cabin suspension system for vibration-damped support of a vehicle cabin according to any of the previous claims,
**characterized in that**
sensors (25) for capturing the operating state of the vehicle (1, 2) are assigned to the vehicle (1, 2) and wherein the operating state signals (Y) from the sensors (25) are transmitted to the control and evaluation unit (15), in which they cause a change in the damping characteristics of the suspension element (6) of the second suspension system (12) by means of the stored damping characteristic curves (16, 17).

7. The flexible cabin suspension system for vibration-damped support of a vehicle cabin according to any of the previous claims,
**characterized in that**
the damping characteristic curves (16, 17) define the intensity of the damping depending on the kinematic parameters of the vehicle (1, 2) and/or the vehicle cabin (4).

8. The flexible cabin suspension system for vibration-damped support of a vehicle cabin according to claim 7,
**characterized in that**
the kinematic parameters are the travelling speed of the vehicle (1, 2), vehicle and/or cabin accelerations, the steering angle of the vehicle axles (23, 24) and/or the cabin mass and/or the vertical position of the cabin (4).

9. The flexible cabin suspension system for vibration-damped support of a vehicle cabin according to any of the previous claims,
**characterized in that**
the sensors (25) are configured as acceleration sensors (27) and/or speed sensors (26) and/or wheel angle sensors (28) and/or position sensors (37).

10. The flexible cabin suspension system for vibration-damped support of a vehicle cabin according to any of the previous claims,
**characterized in that**
the suspension elements (5, 6) of a suspension system (11, 12) are constructed as a combination of various damping elements (32-36).

11. The flexible cabin suspension system for vibration-damped support of a vehicle cabin according to claim 12,
**characterized in that**
the various damping elements (32-36) are constructed as a combination of a spring and a damper (32, 34) and whereas the damper can be separated from or integrated with the spring.

12. The flexible cabin suspension system for vibration-damped support of a vehicle cabin according to any of the previous claims,
**characterized in that**
the suspension elements (5, 6) are able to cause the vehicle cabin (4) to shift vertically relative to the chassis (8), and the damping characteristics of the suspension elements (6) may be effected depending on the vertical change in position of the vehicle cabin (4).

13. The flexible cabin suspension system for vibration-damped support of a vehicle cabin according to any of the previous claims,
**characterized in that**
the intensity of the damping can be changed depending on the deflection of the suspension elements (5, 6).

14. The flexible cabin suspension system for vibration-damped support of a vehicle cabin according to any of the previous claims,
**characterized in that**
the intensity of the damping increases as the deflection of the suspension elements (5, 6) increases.

## Patentansprüche

1. Flexibles Kabinenaufhängungssystem (3) für die schwingungsgedämpfte Abstützung einer Fahrzeugkabine (4) auf dem Chassis (8) eines Traktors (2), wobei mehrere Aufhängungselemente (5, 6) zwischen der Fahrzeugkabine (4) und dem Chassis (8) eingefügt sind, um Schwingungen zu absorbieren,
wobei Aufhängungselemente (5), die einem Frontbereich (9) der Fahrzeugkabine (4) zugewiesen sind, ein Aufhängungssystem (11) bilden, und Aufhängungselemente (6), die dem hinteren Bereich (10) der Fahrzeugkabine (4) zugeordnet sind, ein zweites Aufhängungssystem (12) bilden, wobei im hinteren Bereich (10) ein Fahrersitz (21) und die Hinterachse (24) des Traktors (2) angeordnet sind, und wobei Aufhängungselemente (5, 6), die zum selben Aufhängungssystem (11, 12) gehören, dieselbe Grunddämpfungscharakteristik haben und die Aufhängungselemente (5, 6), die zu unterschiedlichen Aufhängungssystemen (11, 12) gehören, eine unterschiedliche Grunddämpfungscharakteristik haben, insofern als die Aufhängungselemente (5) des ersten Aufhängungssystems (11) eine Standard-Feder-Dämpfer-Kombination (32, 33) umfassen, **dadurch gekennzeichnet, dass** die Aufhängungselemente (6) des zweiten Aufhängungssystems (12) eine Feder-Dämpfer-Kombination (34) mit elektronisch gesteuerten Dämpfern haben, derart dass ihre Dämpfungskennlinie (17) vom Bediener des Traktors (2) gewählt werden kann.

2. Flexibles Kabinenaufhängungssystem für die schwingungsgedämpfte Abstützung einer Fahrzeugkabine nach Anspruch 1,
**dadurch gekennzeichnet, dass** die Dämpfungskennlinien (16, 17) in einer modifizierbaren Form in einer Steuerungs- und Auswertungseinheit (15) gespeichert sind.

3. Flexibles Kabinenaufhängungssystem für die schwingungsgedämpfte Abstützung einer Fahrzeugkabine nach einem der vorherigen Ansprüche,
**dadurch gekennzeichnet, dass** die Dämpfungscharakteristik des zweiten Aufhängungssystems (12) je nach dem Betriebszustand des Fahrzeugs (1, 2) und/oder je nach der Bewegung der Fahrzeugkabine (4) geändert werden kann.

4. Flexibles Kabinenaufhängungssystem für die schwingungsgedämpfte Abstützung einer Fahrzeugkabine nach einem der vorherigen Ansprüche,
**dadurch gekennzeichnet, dass** die Dämpfungscharakteristik der Aufhängungselemente (6) je nach dem Betriebszustand des Fahrzeugs (1, 2) und/oder je nach der Bewegung der Fahrzeugkabine (4) geändert werden können.

5. Flexibles Kabinenaufhängungssystem für die schwingungsgedämpfte Abstützung einer Fahrzeugkabine nach Anspruch 3 oder 4,
**dadurch gekennzeichnet, dass** die Bewegung der Fahrzeugkabine (4) die Stampfbewegungen, die Rollbewegungen (20) und die Nickbewegungen (19) der Fahrzeugkabine (4) umfasst.

6. Flexibles Kabinenaufhängungssystem für die schwingungsgedämpfte Abstützung einer Fahrzeugkabine nach einem der vorherigen Ansprüche,
**dadurch gekennzeichnet, dass** Sensoren (25) zum Erfassen des Betriebszustandes des Fahrzeugs (1, 2) dem Fahrzeug (1, 2) zugewiesen sind und wobei die Signale (Y) des Betriebszustandes von den Sensoren (25) zur Steuerungs- und Auswertungseinheit (15) übertragen werden, wobei sie eine Änderung in der Dämpfungscharakteristik der Aufhängungselemente (6) des zweiten Aufhängungssystems (12) mittels der gespeicherten Dämpfungskennlinien (16, 17) bewirken.

7. Flexibles Kabinenaufhängungssystem für die schwingungsgedämpfte Abstützung einer Fahrzeugkabine nach einem der vorherigen Ansprüche,
**dadurch gekennzeichnet, dass** die Dämpfungskennlinien (16, 17) die Intensität der Dämpfung in Abhängigkeit von den kinematischen Parametern des Fahrzeugs (1, 2) und/oder der Fahrzeugkabine (4) definieren.

8. Flexibles Kabinenaufhängungssystem für die schwingungsgedämpfte Abstützung einer Fahrzeugkabine nach Anspruch 7,
**dadurch gekennzeichnet, dass** die kinematischen Parameter die Fahrgeschwindigkeit des Fahrzeugs (1, 2), Fahrzeug- und/oder Kabinenbeschleunigungen, der Lenkwinkel der Fahrzeugachsen (23, 24) und/oder die Kabinenmasse und/oder die vertikale Position der Kabine (4) sind.

9. Flexibles Kabinenaufhängungssystem für die schwingungsgedämpfte Abstützung einer Fahrzeugkabine nach einem der vorherigen Ansprüche,
**dadurch gekennzeichnet, dass** die Sensoren (25) als Beschleunigungssensoren (27) und/oder Geschwindigkeitssensoren (26) und/oder Radwinkelsensoren (28) und/oder Positionssensoren (37) ausgelegt sind.

10. Flexibles Kabinenaufhängungssystem für die schwingungsgedämpfte Abstützung einer Fahrzeugkabine nach einem der vorherigen Ansprüche,
**dadurch gekennzeichnet, dass** die Aufhängungselemente (5, 6) eines Aufhängungssystems (11, 12) als Kombination verschiedener Dämpfungselemente (32-36) konstruiert sind.

11. Flexibles Kabinenaufhängungssystem für die schwingungsgedämpfte Abstützung einer Fahrzeugkabine nach Anspruch 12,
**dadurch gekennzeichnet, dass** die verschiedenen Dämpfungselemente (32-36) als Kombination aus einer Feder und einem Dämpfer (32, 34) konstruiert sind und wobei der Dämpfer von der Feder getrennt oder in dieselbe integriert sein kann.

12. Flexibles Kabinenaufhängungssystem für die schwingungsgedämpfte Abstützung einer Fahrzeugkabine nach einem der vorherigen Ansprüche,
**dadurch gekennzeichnet, dass** die Aufhängungselemente (5, 6) bewirken können, dass die Fahrzeugkabine (4) sich vertikal gegenüber dem Chassis (8) verschieben kann und dass die Dämpfungscharakteristik der Aufhängungselemente (6) je nach der vertikalen Änderung der Position der Fahrzeugkabine (4) beeinflusst werden kann.

13. Flexibles Kabinenaufhängungssystem für die schwingungsgedämpfte Abstützung einer Fahrzeugkabine nach einem der vorherigen Ansprüche,
**dadurch gekennzeichnet, dass** die Stärke der Dämpfung je nach der Auslenkung der Aufhängungselemente (5, 6) geändert werden kann.

14. Flexibles Kabinenaufhängungssystem für die schwingungsgedämpfte Abstützung einer Fahrzeugkabine nach einem der vorherigen Ansprüche,
**dadurch gekennzeichnet, dass** die Stärke der Dämpfung sich erhöht, wenn sich die Auslenkung der Aufhängungselemente (5, 6) erhöht.

## Revendications

1. Système de suspension flexible de cabine (3) pour supporter de façon amortie en vibration 'une cabine (4) de véhicule sur le châssis (8) d'un tracteur (2), dans lequel une pluralité d'éléments de suspension (5, 6) sont interposés entre la cabine (4) de véhicule et le châssis (8) pour absorber les vibrations, dans lequel des éléments de suspension assignés à la zone avant (9) de la cabine (4) de véhicule forment un premier système de suspension (11) et des éléments de suspension (6) assignés à la zone arrière (10) de la cabine (4) de véhicule forment un deuxième système de suspension (12), dans laquelle zone arrière (10) un siège (21) de conducteur et l'essieu arrière (24) du tracteur (2) sont agencés, et dans lequel des éléments de suspension (5, 6) appartenant au même système de suspension (11, 12) ont les mêmes caractéristiques d'amortissement de base et les éléments de suspension (5, 6) appartenant à des systèmes de suspension (11, 12) différents ont des caractéristiques d'amortissement de base différentes en ce sens que les éléments de suspension (5) du premier système de suspension (11) comprennent une combinaison ressort-amortisseur (32, 33) standard, **caractérisé en ce que** les éléments de suspension (6) du deuxième système de suspension (12) comprennent une combinaison ressort-amortisseur (34) avec des amortisseurs électroniquement commandés de sorte que sa courbe caractéristique d'amortissement (17) peut être sélectionnée par l'opérateur du tracteur (2).

2. Système de suspension flexible de cabine pour supporter de façon amortie en vibration une cabine de véhicule selon la revendication 1, **caractérisé en ce que** les courbes caractéristiques d'amortissement (16, 17) sont stockées sous forme modifiable dans une unité de commande et d'évaluation.

3. Système de suspension flexible de cabine pour supporter de façon amortie en vibration une cabine de véhicule selon l'une quelconque des revendications précédentes, **caractérisé en ce que** la caractéristique d'amortissement du deuxième système de suspension (12) peut être changée en fonction de l'état de fonctionnement du véhicule (1, 2) et/ou en fonction du mouvement de la cabine (4) de véhicule.

4. Système de suspension flexible de cabine pour supporter de façon amortie en vibration une cabine de véhicule selon l'une quelconque des revendications précédentes, **caractérisé en ce que** la caractéristique d'amortissement des éléments de suspension (6) peut être changée en fonction de l'état de fonctionnement du véhicule (1, 2) et / ou en fonction du mouvement de la cabine (4) de véhicule.

5. Système de suspension flexible de cabine pour supporter de façon amortie en vibration une cabine de véhicule selon la revendication 3 ou 4, **caractérisé en ce que** le mouvement de la cabine (4) de véhicule comprend les mouvements de pilonnement, le mouvements de roulis (20) et les mouvements de tangage (19) de la cabine (4) de véhicule.

6. Système de suspension flexible de cabine pour supporter de façon amortie en vibration une cabine de véhicule selon l'une quelconque des revendications précédentes, **caractérisé en ce que** des capteurs (25) pour détecter l'état de fonctionnement du véhicule (1, 2) sont assignés au véhicule (1, 2) et dans lequel les signaux d'état de fonctionnement (Y) provenant des capteurs (25) sont transmis à l'unité de commande et d'évaluation (15) dans laquelle ils suscitent un changement des caractéristiques d'amortissement des éléments de suspension (6) du deuxième système de suspension (12) au moyen des courbes caractéristiques d'amortissement stockées.

7. Système de suspension flexible de cabine pour supporter de façon amortie en vibration une cabine de véhicule selon l'une quelconque des revendications précédentes, **caractérisé en ce que** les courbes caractéristiques d'amortissement (16, 17) définissent l'intensité de l'amortissement en fonction des paramètres cinématiques du véhicule (1, 2) et / ou de la cabine (4) de véhicule.

8. Système de suspension flexible de cabine pour supporter de façon amortie en vibration une cabine de véhicule selon la revendication 7, **caractérisé en ce que** les paramètres cinématiques sont la vitesse de progression du véhicule (1, 2), les accélérations du véhicule et / ou de la cabine, l'angle de braquage des essieux (23, 24) du véhicule et / ou la masse de la cabine et / ou la position verticale de la cabine (4).

9. Système de suspension flexible de cabine pour supporter de façon amortie en vibration une cabine de véhicule selon l'une quelconque des revendications précédentes, **caractérisé en ce que** les capteurs (25) sont configurés comme des capteurs d'accélération (27) et / ou des capteurs de vitesse (26) et / ou des capteurs d'angle des roues (28) et / ou des capteurs de position (37).

10. Système de suspension flexible de cabine pour supporter de façon amortie en vibration une cabine de véhicule selon l'une quelconque des revendications précédentes, **caractérisé en ce que** les éléments de suspension (5, 6) d'un système de suspension (11, 12) sont conçus comme une combinaison de divers éléments d'amortissement (32 - 36).

11. Système de suspension flexible de cabine pour supporter de façon amortie en vibration une cabine de véhicule selon la revendication 10, **caractérisé en ce que** les divers éléments d'amortissement (32 - 36) sont conçus comme une combinaison d'un ressort et d'un amortisseur (32, 34) et l'amortisseur peut être séparé du ressort ou intégré dans celui-ci.

12. Système de suspension flexible de cabine pour supporter de façon amortie en vibration une cabine de véhicule selon l'une quelconque des revendications précédentes, **caractérisé en ce que** les éléments de suspension (5, 6) peuvent provoquer un changement de position verticale de la cabine (4) de véhicule par rapport au châssis (8) et les caractéristiques d'amortissement des éléments de suspension peuvent être affectées en fonction du changement de position verticale de la cabine (4) de véhicule.

13. Système de suspension flexible de cabine pour supporter de façon amortie en vibration une cabine de véhicule selon l'une quelconque des revendications précédentes, **caractérisé en ce que** l'intensité de l'amortissement peut être changée en fonction de la déflexion des éléments de suspension (5, 6).

14. Système de suspension flexible de cabine pour supporter de façon amortie en vibration une cabine de véhicule selon l'une quelconque des revendications précédentes, **caractérisé en ce que** l'intensité de l'amortissement augmente à mesure que la déflexion des éléments de suspension (5, 6) augmente.
